# EUROPEAN PATENT SPECIFICATION

(11) **EP 1 244 320 B1**
(45) Date of publication and mention of the grant of the patent: **01.12.2004**
(21) Application number: 02252031.6
(22) Date of filing: 21.03.2002
(51) Int. Cl.: H04Q 7/36

(54) **Radio base station**
Funkbasisstation
Station de base radio

(30) Priority: 21.03.2001 JP 2001080801
(43) Date of publication of application: 25.09.2002
(73) Proprietor: NEC CORPORATION, Tokyo (JP)
(72) Inventor: Takeuchi, Ryosuke, Minato-ku, Tokyo (JP)
(74) Representative: Moir, Michael Christopher

(56) References cited:
- EP-A- 0 439 926
- EP-A- 0 869 629
- EP-A- 1 096 817
- "N+M RADIO SECTOR FLEXIBLE REDUNDANCY FOR POINT-TO-MULTIPOINT SYSTEMS" RESEARCH DISCLOSURE, KENNETH MASON PUBLICATIONS, HAMPSHIRE, GB, no. 421, May 1999 (1999-05), pages 658-659, XP000888728 ISSN: 0374-4353

## Description

### BACKGROUND OF THE INVENTION

The present invention relates to radio base station equipment and, more particularly, to radio base station equipment used for communication systems that have adopted the CDMA (Code-Division Multiple-Access) system.

For the purposes of improving the frequency utilization efficiency and alleviating adverse effects in multi-path environments, the communication systems based on the CDMA system utilize a communication method, in which the communication coverage area of the radio base station is divided into a plurality of sectors for communication with a mobile station by using a plurality of carriers at different frequencies for each sector.

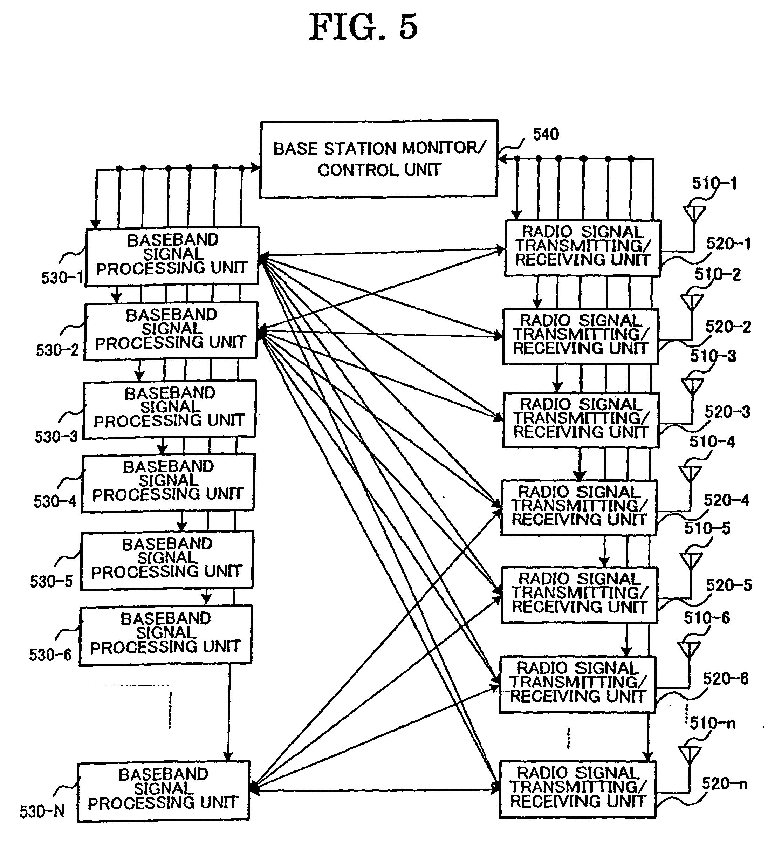

Fig. 5 is a block diagram showing an example of prior art radio base station used for the CDMA communication system.

As shown in the Figure, this prior art example comprises antennas 510-1 to 510-n each provided for each sector for radio signal transmission and reception, radio signal transmitting/receiving units 520-1 to 520-n each provided for each sector for data transmission and reception with a mobile station (not shown) via each of the antennas 510-1 to 510-n, baseband signal processing units 530-1 to 530-N for baseband processing data transmitted and received by each of the radio signal transmitting/receiving units 520-1 to 520-n and base station monitor/control unit 540 for monitoring and controlling the radio signal transmitting/receiving units 520-1 to 520-n and baseband signal processing units 530-1 to 530-N and also transmitting and receiving data to and from a hierarchically upper station (not shown). The antennas 510-1 to 510-n and the radio signal transmitting/receiving units 520-1 to 520-n are each assigned to each sector such that, for instance, the antenna 510-1 and the radio signal transmitting/receiving unit 520-1 are assigned to the sector 1, the antenna 510-2 and the radio signal transmitting/receiving unit 520-2 are assigned to the selector 2, and so forth.

The baseband signal processing units 530-1 to 530-N require multiplexed received data for all the sectors, and are thus each connected to all the radio signal transmitting/receiving units 520-1 to 520-n. The radio signal transmitting/receiving units 520-1 to 520-n are managed by the base station monitor/control unit 540, and always mutually exchange their own operation data with one another.

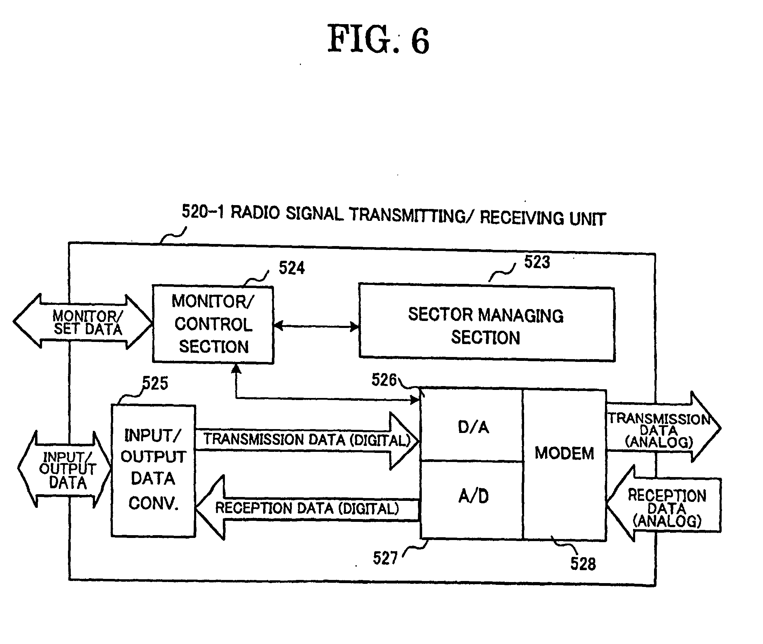

Fig. 6 is a block diagram showing the construction of the radio signal transmitting/receiving unit 520-1 shown in Fig. 5.

As shown in Fig. 6, the radio signal transmitting/receiving unit 520-1 in this embodiment includes a modulating/demodulating section 528 for demodulating data received via the antenna 510-1 and modulating data to be transmitted via the antenna 510-1 to the mobile station, an A/D converter section 527 for converting the demodulated received data from the modulating/demodulating section 528 to digital data, an input/output data converter section 525 for converting the digital received data from the A/D converter section 527 to output data to be outputted to the baseband signal processing units 530-1 to 530-n and also converting transmitted data therefrom to predetermined form data, a D/A converter section 526 for converting the output data from the input/output data converter section 525 to analog data, a sector managing section 523 for managing the operation data at the presently used radio modulation frequency or the like in the sector 1 and a monitor/control section 524 for monitoring and controlling the radio signal transmitting/receiving unit 520-1. The radio signal transmitting/receiving units 520-2 to 520-n are the same in construction as the unit 520-1 except for the sector corresponding to the operation data managed in the sector managing section 523.

The operation of the radio base station having the above construction will be described. First, the operation at the time of data transmission will be described.

Data transmitted from the upper station is transmitted via the base station monitor/control unit 540 to the baseband signal processing units 530-1 to 530-n for baseband processing therein.

The baseband processed data is transmitted from the baseband signal processing units 530-1 to 530-n to the radio signal transmitting/receiving units 520-1 to 520-n. In the units 520-1 to 520-N, the baseband processed data is converted in the D/A converter 526 to analog data and then modulated in the modulating/demodulating section 528. The modulated data is transmitted via the antennas 510-1 to 510-n.

The operation at the time of data reception will now be described.

Data received via the antennas 510-1 to 510-n are fed to the radio signal transmitting/receiving units 520-1 to 520-n. In the units 520-1 to 520-n, the transmitted data is demodulated in the modulating/demodulating section 528, then converted in the A/D converter section 527 to digital data and then transmitted the input/output data converter section 525 to the baseband signal processing units 530-1 to 530-n.

The data transmitted to the baseband signal processing units 530-1 to 530-N are inversely dispersed in these units for extracting user's data, which is transmitted via the base station monitor/control unit 540 to the upper station.

In the event of a trouble occurrence in any of the radio signal transmitting/receiving units 520-1 to 520-n, the operation data such as the radio modulation frequency used in the units 520-1 is transmitted to a spare radio signal transmitting/receiving unit (not shown). The spare radio signal transmitting/receiving unit thus executes the in-trouble radio signal transmitting/receiving unit in lieu thereof on the basis of the transmitted operation data.

As shown above, in the prior art radio base station when trouble occurs in any radio signal transmitting/receiving unit the operation data such as the radio modulation frequency used in that radio signal transmitting/receiving unit has to be transmitted to the spare radio signal transmitting/receiving unit. Therefore, data exchange for compensating for the trouble becomes necessary in addition to the user's data exchange between the baseband signal processing units and the base station monitor/control unit. This gives rise to a problem of sudden increase of the process data quantity in the base station monitor/control unit.

Besides the process data quantity in the base station monitor/control unit increasing, trouble occurrence in parts of the radio base station other than the radio signal transmitting/receiving units may make it difficult to transmit real-time data and also prevent user data exchange, thus adversely affecting the entire service.

EP 1 096 817 A1 (Ericsson) published on 02.05.2001 discloses the operation of a multi-cell transceiver for a base station, which transceiver has a memory which can hold operating parameters of the transceiver for different cells (sectors) to which the transceiver can be corrected.

EP 0 869 629 Al (Matsushita) discloses base station equipment that includes a transmitting/receiving section for each sector, a baseband processing section for each sector, and a sector switch for selecting a connection between selected transmitting/receiving sections and a baseband processing section when a handover is made.

### SUMMARY OF THE INVENTION

The preferred embodiments of the present invention have an object, in view of the above problems inherent in the prior art, of providing a radio base station which allows, in the event of trouble occurrence in any radio signal transmitting/receiving unit, for the trouble to be compensated in a short interval of time and without any increase in quantity of data processed.

According to an aspect of the present invention, there is provided a radio base station that includes: a plurality of radio signal transmitting/receiving means each having a sector-managing section that contains operation data for all sectors of a communication coverage area in which the base station is configured to transmit and receive data to and from a mobile station, wherein the number of radio signal transmitting/receiving means is greater than the number of sectors; and, monitor/control means configured to assign more than one of the radio signal transmitting/receiving means to a sector in which transmission or reception difficulties are encountered. The base station also includes a connecting means for connecting the plurality of radio signal transmitting/receiving means to one another without the agency of the monitor/control means.

Preferably, the base station also includes a plurality of baseband signal processing means for baseband-processing data received and/or to-be-transmitted via the plurality of radio signal transmitting/receiving means, wherein: a respective one of the radio signal transmitting/receiving means is assigned to each sector for transmitting and receiving data to and from a mobile station; the monitor/control means monitors and controls the plurality of radio signal transmitting/receiving means and the plurality of baseband signal processing means; each radio signal transmitting/receiving means executes the data transmission and reception by using operation data determined for each sector; and, each of the plurality of radio signal transmitting/receiving means manages all the operation data predetermined for the plurality of sectors, and uses selected operation data, out of the aforesaid operation data, for causing the data transmission and reception to be executed in the sector that corresponds to the selected operation data.

Preferably, each of the plurality of radio signal transmitting/receiving means recognizes the operation state of all the other radio signal transmitting/receiving means via the connecting means, and is able to use corresponding operation data to that used by an introuble radio signal transmitting/receiving means so as to transmit and receive in the same sector as the in-trouble radio signal transmitting/receiving means.

Preferably, the plurality of radio signal transmitting/receiving means each includes: a sector-managing section for managing all the operation data predetermined for each of the plurality of sectors; a state-data judging section for checking the operation state of the other radio signal transmitting/receiving means, by obtaining state data indicative of the operation state of the other radio signal transmitting/receiving means via the connecting means, and for transmitting to the other radio signal transmitting/receiving means state data indicative of the operation state of the radio signal transmitting/receiving means of which it forms part; and, a selector section for selecting, among the operation data managed in the sector managing section, operation data corresponding to a sector in which an in-trouble radio signal transmitting/receiving means executes data transmission and reception, the selection being on the basis of a check result in the state-data judging section.

Preferably, a base station that includes the baseband signal processing means further includes a load dispersion processing means for transmitting, under control of the monitor control means, baseband-processed data from the baseband signal processing means to a predetermined radio signal transmitting/receiving means from among the plurality of radio signal transmitting/receiving means. More preferably, the load dispersion processing means transmits data received by the radio signal transmitting/receiving means to all of the plurality of baseband signal processing means.

A further aspect of the subject invention is a Code-Division Multiple-Access (CDMA) communication system that includes any of the radio base stations described above.

A still further aspect of the subject invention is a method for communicating between a radio base station and mobile stations of a CDMA communication system, the method including the steps of: dividing a communication coverage area into a plurality of sectors for data transmission and reception with respect to the mobile stations by using particular operation data for each sector; storing, in each of a plurality of radio signal transmitting/receiving units of the system, operation data to be used for each of the plurality of sectors for communication with the mobile stations; selecting, out of the operation data, selected operation data for transmitting and receiving data in a sector corresponding to the selected operation data; setting a specified sector, corresponding to the selected operation data, for transmission and reception of data; and, causing the specified sector to be used for data transmission to and reception from mobile stations, by using the selected operation data. The method has a further step of connecting the plurality of radio signal transmitting/ receiving means together by a connecting means so that they are in direct communication with each other.

Preferably, in the foregoing method, each of the plurality of radio signal transmitting/receiving means recognizes the operation state of the other radio signal transmitting/receiving means via the connecting means, and one of the radio signal transmitting/receiving means, upon recognizing the operation state of an in-trouble radio signal transmitting/receiving means, selects the sector of the in-trouble radio signal transmitting/receiving means for data transmission to and reception from mobile stations, by using the operation data of the selected sector.

### BRIEF DESCRIPTION OF THE DRAWINGS

Preferred features of the present invention will now be described, by way of example only, with reference to the accompanying drawings, in which:-
Fig. 1 is a block diagram showing a first embodiment of the radio base station according to the present invention;
Fig. 2 is a block diagram showing the construction of the radio signal transmitting/receiving unit 20-1 shown in Fig. 1;
Fig. 3 is a block diagram showing a second embodiment of the radio base station according to the present invention;
Fig. 4 is a drawing for explaining the operation of the radio base station;
Fig. 5 is a block diagram showing an example of prior art radio base station used for the CDMA communication system; and
Fig. 6 is a block diagram showing the construction of the radio signal transmitting/receiving unit 520-1 shown in Fig. 5.

### PREFERRED EMBODIMENTS OF THE INVENTION

Preferred embodiments of the present invention will now be described with reference to the drawings.

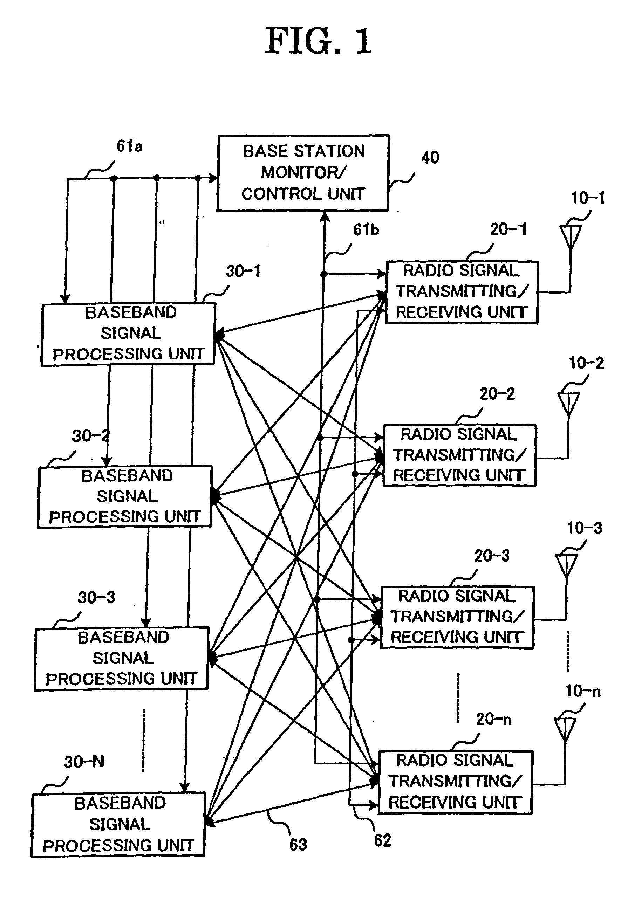

Fig. 1 is a block diagram showing a first embodiment of the radio base station according to the present invention.

As shown in the Figure, this embodiment comprises antennas 10-1 to 10-n, which are provided in number more than the number of sectors of the communication coverage area of the radio base station and serve to transmit and receive radio signals, radio signal transmitting/receiving units 20-1 to 20-n for transmitting and receiving data to and from a mobile station (not shown) via the antennas 10-1 to 10-n, baseband signal processing units 30-1 to 30-n, which are each connected via data bus lines 63 to all the radio signal transmitting/receiving units 20-1 to 20-n and serve to baseband-process data transmitted to and received in the radio signal transmitting/receiving units 20-1 to 20-n, and a base station monitor/control unit 40, which is connected via a data transmission line 61a to the baseband signal processing units 30-1 to 30-N and also connected via a data transmission line 61b to the radio signal transmitting/receiving units 20-1 to 20-n and serves to supply the user's data for the baseband signal processing units 20-1 to 20-n and transmission data to a hierarchically upper station (not shown), as well as monitoring and controlling the baseband signal processing units 30-1 to 30-N and radio signal transmitting/receiving units 20-1 to 20-n. The radio signal transmission/receiving units 20-1 to 20-n are connected to one another via a state data common line 62 as connecting means, and thus they are all in a common state of operation.

The baseband signal processing units 30-1 to 30-N require multiplexed received data for all the sectors, and they are thus each connected to all the radio signal transmitting/receiving units 20-1 to 20-n.

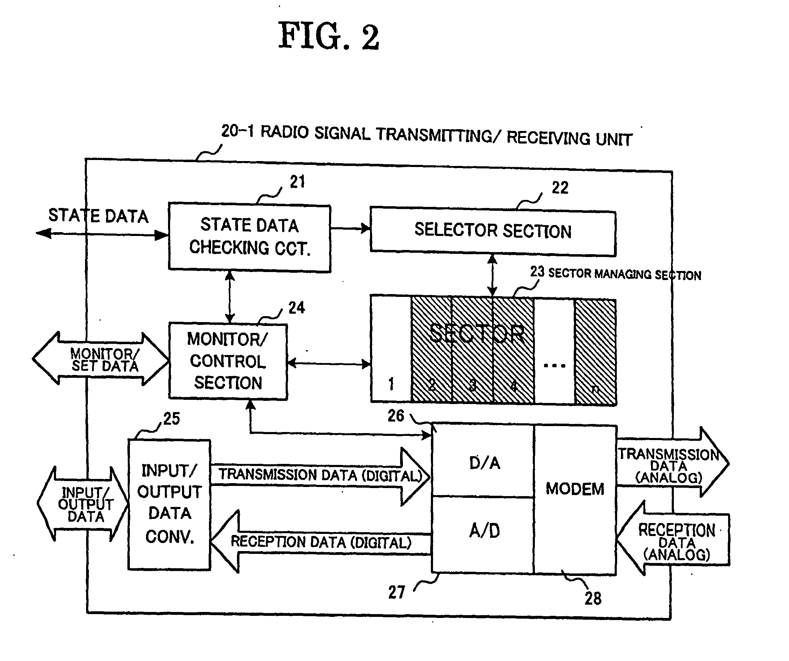

Fig. 2 is a block diagram showing the construction of the radio signal transmitting/receiving unit 20-1 shown in Fig. 1. The radio signal transmitting/receiving units 20-2 to 20-n are the same in construction as the unit 20-1 shown in Fig. 1.

As shown in Fig. 2, the radio signal transmitting/receiving unit 20-1 in this embodiment includes a modulating/demodulating unit 28 for demodulating data received via the antenna 10-1 and modulating data for transmission via the antenna 10-1 to the mobile station, an A/D converter section 27 for converting the modulated data from the modulating/demodulating unit 28 to digital data, an input/output data converter section 25 for converting the digital data from the A/D converter section 27 to output data to be transmitted to the baseband signal processing units 30-1 to 30-N and converting the output data therefrom to predetermined form data for transmission, a D/A converter section 26 for converting the predetermined form data for transmission to analog data, a sector managing section 23 for managing the operation data such as radio modulation frequency of individual sectors used in the radio signal transmitting/receiving units 20-1 to 20-n, a state data check circuit 21 for checking the operation states of the other radio signal transmitting/receiving units 20-2 to 20-n by receiving state data indicative of the operation states of the units 20-2 to 20-n via the state data common line 62 and transmitting state data indicative of the operation state of the own radio signal transmitting/receiving unit 20-1 via the state data common line 62 to the other radio signal transmitting/receiving units 20-2 to 20-n, a selector section 22 for selecting operation data concerning a desired sector among the operation data managed in the sector managing section 23, and a monitor/control section 24 for monitoring and controlling the radio signal transmitting/receiving section 20-1.

The operation of the radio base station having the above construction will now be described.

First, the operation at the time of initialization will be described. At the start time of service, the base station monitor/control unit 40 transmits the operation data such as radio modulation frequency to be used in the radio signal transmitting/receiving units 20-1 to 20-n to all thereof. In the radio signal transmitting/receiving units 20-1 to 20-n, the sector managing section 23 manages the operation data transmitted from the base station monitor/control unit 40 for each sector.

In this embodiment, the communication coverage area of the radio base station is divided into three sectors 1 to 3, the radio signal transmitting/receiving units 20-1 to 20-3 are each assigned to each of the sectors 1 to 3, and the radio signal transmitting/receiving units 20-4 to 20-n serve as spare radio signal transmitting/receiving units. The radio signal transmitting/receiving units 20-1 to 20-3 use operation data corresponding to the sectors 1 to 3 among the operation data managed in the sector managing unit 23 for data transmission and reception.

The operation at the time of data transmission will be described.

Data transmitted from the upper station is transmitted via the base station monitor/control unit 40 to the baseband processing units 30-1 to 30-N for baseband processing therein. The baseband processed data are transmitted from the baseband signal processing units 30-1 to 30-N to the radio signal 6 transmitting/receiving units 20-1 to 20-3. In the radio signal transmitting/receiving units 20-1 to 20-3, the transmitted data is converted in the D/A converter section 26 to analog data, then modulated in the modulating/demodulating section 28 for being transmitted via the antennas 10-1 to 10-3.

The operation at the time of data reception will now be described. Data received via the antennas 10-1 to 10-3 are fed to the radio signal transmitting/receiving units 20-1 to 20-3. In the radio signal transmitting/receiving units 20-1 to 20-n, the received data is demodulated in the modulating/demodulating section 28, converted in the A/D converter section 27 and then transmitted via the input/output data converter section 25 to the baseband signal processing units 30-1 to 30-N.

The data transmitted to the baseband signal processing units 30-1 to 30-N are despread in the units 30-1 to 30-N for extracting user's data, which is transmitted via the base station monitor/control unit 40 to the upper station.

Now, a process in the event of trouble occurrence in the radio signal transmitting/receiving units 20-1 to 20-n will be described. An example is taken in the event of trouble occurrence in the transmitting/receiving unit 20-1, in which the radio signal transmitting/receiving unit 20-4 executes the process in lieu thereof.

The radio signal transmitting/receiving units 20-1 to 20-n are connected together by the state data common line 62, and are all in a common operation state. This operation state is always mutually exchanged among the radio signal transmitting/receiving units 20-1 to 20-n. The data representing the operation state of the radio signal transmitting/receiving units 20-1 to 20-n is transmitted to the base station monitor/control unit 40 for resource management therein.

In the event of trouble occurrence in the radio signal transmitting/receiving unit 20-1, the spare radio signal transmitting/receiving unit 20-4 recognizes the trouble occurrence in the unit 20-1 on the basis of the data of the operation state of the radio signal transmitting/receiving unit 20-1 obtained via the state data common line 62. Subsequently, selector section 22 selects the operation data such as the radio modulation frequency of the sector 1 used in the radio signal transmitting/receiving unit 20-1 among the operation data managed in the sector managing section 23 in the radio signal transmitting/receiving unit 20-4, and the radio signal transmitting/receiving unit 20-4 executes the process in the radio signal transmitting/receiving unit 20-1 in lieu thereof by using the operation data of the sector 1.

The process in the radio signal transmitting/receiving unit 20-4 is reported via the data transmission line 61b to the base station monitor/control unit 40, thus bringing an end to the switching operation with respect to the trouble occurrence.

As has been described, in this embodiment the operation data in each sector is commonly managed in each of a plurality of radio signal transmitting/receiving units, and radio signal transmitting/receiving units are exchanged among these units via the state data common line. In the event that trouble occurrence in a radio signal transmitting/receiving unit is recognized on the basis of the exchanged operation state data, a radio signal transmitting/receiving unit provided as a spare unit executes the process in the in-trouble radio signal transmitting/receiving unit in lieu of this unit by using the operation data used therein. Thus, compensation in the event of trouble occurrence in a radio signal transmitting/receiving unit is localized, and the process in the base station monitor/control unit is not increased. Also, closed coping-with is possible among the radio signal transmitting/receiving units, thus simplifying the operation of switching to the spare radio signal transmitting/receiving unit at the time of trouble occurrence. Furthermore, since the switching among the radio signal transmitting/receiving units is executed by closed process, it is possible to suppress sudden coverage traffic increase and reduce the transmitted data quantity.

Still further, at the time of initialization the base station monitor/control unit transmits the operation data for the individual sectors with like contents to all the radio signal transmitting/receiving units. Thus, it is possible to reduce the data transmission process at the time of initialization.

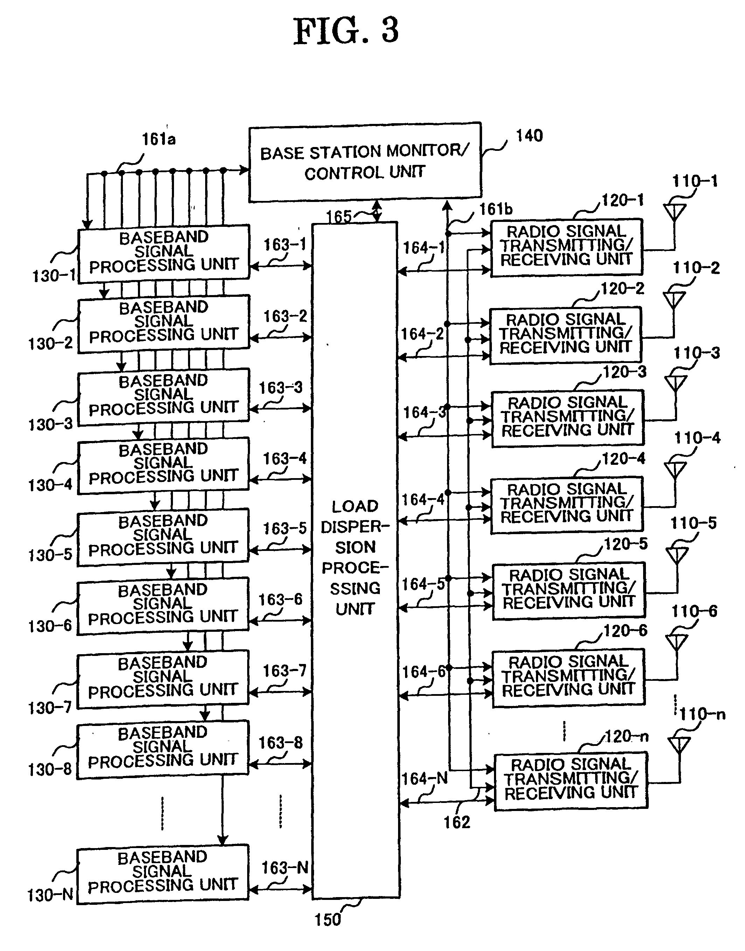

Fig. 3 is a block diagram showing a second embodiment of the radio base station according to the present invention.

As shown in Fig. 3, this embodiment comprises antennas 110-1 to 110-n, which are provided in number more than the number of sectors of the communication coverage area of the radio base station and serve to transmit and receive radio signals, radio signal transmitting/receiving units 120-1 to 120-n for transmitting and receiving data to and from a mobile station (not shown) via the antennas 110-1 to 110-n, baseband signal processing units 130-1 to 130-N for the baseband process of the data transmitted to and received in the radio signal transmitting/receiving units 120-1 to 120-n, a base station monitor/control unit 140, which is connected via a data transmission line to the baseband signal processing units 130-1 to 130-N and also connected via a data transmission line 161b to the radio signal transmitting/receiving units 120-1 to 120-n and serves to supply the user's data for the baseband signal processing units 130-1 to 130-N and transmission data to a hierarchically upper station (not shown), as well as monitoring and controlling the baseband signal processing units 130-1 to 130-N and radio signal transmitting/receiving units 120-1 to 120-n, and a load dispersion processing unit 150, which is connected via data bus lines 163-1 to 163-N to the baseband signal processing units 130-1 to 130-N and also connected via data bus lines 164-1 to 164-N to the radio signal transmitting/receiving units 120-1 to 120-n and serves to transmit data received in the radio signal transmitting/receiving units 120-1 to 120-n to all the baseband signal processing units 130-1 to 130-N and also transmit the baseband processed data from the baseband signal processing units 130-1 to 130-N to a predetermined radio signal transmitting/receiving unit under control in the baseband monitor/control unit 140. The radio signal transmitting/receiving units 120-1 to 120-n are connected together by a state data common line 162 and are all in a common operation state.

As shown above, this embodiment is different from the previous first embodiment only in that the data received in the radio signal transmitting/receiving units 120-1 to 120-n are transmitted to all the baseband signal processing units 130-1 to 130-N and that the baseband processed data are transmitted from the baseband signal processing units 130-1 to 130-N under control of the base station monitor/control unit to the load dispersion processing unit 150 for transmitting data to a predetermined radio signal transmitting/receiving unit.

The operation of the radio base station having the above construction will now be described.

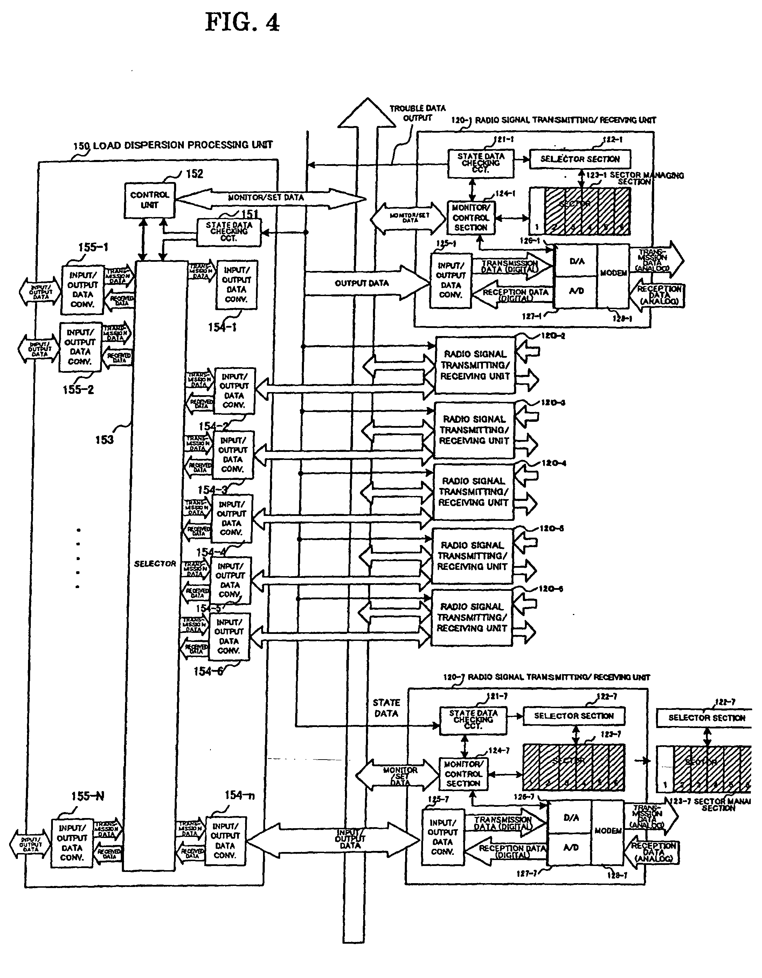

Fig. 4 is a drawing for explaining the operation of the radio base station shown in Fig. 3. First, the operation at the time of initialization will be described.

At the start time of service, the base station monitor/control unit 140 transmits the operation data such as radio modulation frequency to be used in the radio signal transmitting/receiving units 120-1 to 120-n to all thereof.

In the radio signal transmitting/receiving units 120-1 to 120-n, the sector managing section 123-1 to 123-n manages the operation data transmitted from the base station monitor/control unit 140 for each sector.

In this embodiment, the communication coverage area of the radio base station is divided into six sectors 1 to 6, the radio signal transmitting/receiving units 120-1 to 120-6 are each assigned to each of the sectors 1 to 6, and the radio signal transmitting/receiving units 120-7 serves as a spare radio signal transmitting/receiving unit. The radio signal transmitting/receiving units 120-1 to 120-6 use operation data corresponding to the sectors 1 to 6 among the operation data managed in the sector managing units 123-1 to 123-6 for data transmission and reception.

The operation at the time of data transmission will be described.

Data transmitted from the upper station is transmitted via the base station monitor/control unit 140 to the baseband processing units 130-1 to 130-N for baseband processing therein. The baseband processed data are transmitted from the baseband signal processing units 130-1 to 130-N to a load dispersion processing unit 150.

In the load dispersion processing unit 150, the baseband processed data are transmitted in the baseband signal processing units 130-1 to 130-N for conversion therein to a predetermined form. The selector 153 selects, on the basis of an instruction from the base station monitor/control unit 140, a radio signal transmitting/receiving unit corresponding to the data transmission sector. The data is thus transmitted to the selected radio signal transmitting/receiving unit via the corresponding one of the input/output data converters 154-1 to 154-n. In this embodiment, it is assumed that the radio signal transmitting/receiving unit 120-1 is selected.

Subsequently, the data transmitted to the radio signal transmitting/receiving unit 120-1 is converted in the D/A converter section 126-1 therein to analog data, then modulated in the modulating/demodulating section 128-1 for being transmitted via the antenna 110-1.

The operation at the time of data reception will now be described. As an example, the data receiving operation will be described with respect to the sector 1.

Data received in the antenna 110-1 is fed to the radio signal transmitting/receiving unit 120-1, in which the data is demodulated in the modulating/demodulating 128-1 and converted in the A/D converter section 127-1 to digital data. The digital data is converted via the input/output data converter section 125-1 to the load dispersion processing unit 150. The received data in the load dispersion processing unit 150 is transmitted to all the baseband signal processing units 130-1 to 130-N under control of the load dispersion processing unit 150. The received data is thus selectively despread, and process concentration in a particular baseband signal processing unit is evaded.

The data transmitted to the baseband signal processing units 130-1 to 130-N are despread therein for extracting user's data, which is transmitted via the base station monitor/control unit 140 to the upper station.

Now, a process in the event of trouble occurrence in the radio signal transmitting/receiving units 120-1 to 120-n will be described. An example is taken in the event of trouble occurrence in the transmitting/receiving unit 120-1, in which the radio signal transmitting/receiving unit 120-7 executes the process in lieu thereof. In the event of trouble occurrence in the radio signal transmitting/receiving section 120-1, the data outputted for transmission from the modulating/demodulating unit 128-1 shown in Fig. 4 may not be transmitted from the radio signal transmitting/receiving unit 120-1, or the data inputted to the modulating/demodulating unit 128-1 may not be received in the radio signal transmitting/receiving unit 120-1.

The radio signal transmitting/receiving units 120-1 to 120-7 are connected together by the state data common line 162, and are all in a common operation state. This operation state is always mutually exchanged among the radio signal transmitting/receiving units 120-1 to 120-n. The data representing the operation state of the radio signal transmitting/receiving units 120-1 to 120-n is transmitted to the base station monitor/control unit 140 for resource management therein.

In the event of trouble occurrence in the radio signal transmitting/receiving unit 120-1, the spare radio signal transmitting/receiving unit 121-7 recognizes the trouble occurrence in the unit 120-1 on the basis of the data of the operation state of the radio signal transmitting/receiving unit 120-1 obtained via the state data common line 162. This trouble occurrence data is also reported to the load dispersion processing unit 150.

Subsequently, selector section 122-7 selects the operation data such as the radio modulation frequency of the sector 1 used in the radio signal transmitting/receiving unit 120-1 among the operation data managed in the sector managing section 123-7, and the radio signal transmitting/receiving unit 120-7 executes the process in the radio signal transmitting/receiving unit 120-1 in lieu thereof by using the operation data of the sector 1.

The process in the radio signal transmitting/receiving unit 120-7 is reported via the data transmission line 161b to the base station monitor/control unit 140, thus bringing an end to the switching operation with respect to the trouble occurrence.

As shown above, the process of compensating for the trouble occurrence does not require instruction and control of the base station monitor/control unit, and it is thus possible to promptly cope with the trouble occurrence. In addition, the radio base station is free from sudden traffic increase in its internal data transmission lines, nor is it occupied by data concerning the trouble occurrence compensation.

With the above construction according to the present invention, it is possible to curtail time of radio modulated wave transmission interruption and also time of received data demodulation interruption at the time of the radio signal transmitting/receiving unit switching in the CDMA base station.

In addition, it is possible to: obtain a traffic alleviation effect owing to saving of message exchanges among the process units in the CDMA base station accompanying the trouble-occurrence compensation process, enable stable control by evading an otherwise-possible sudden process-data increase in the station, and reduce data held in the station.

The text of the abstract filed herewith is repeated here as part of the specification.

Radio signal transmitting/receiving units manage all operation data used in a plurality of sectors. Among such operation data, desired operation data is selected for data transmission and reception for a sector corresponding to the selected operation data. Among the radio signal transmitting/receiving units, a spare radio signal transmitting/receiving unit which is not normally used, recognizes the operation state of the other radio signal transmitting/receiving units via a state data common line. In the event of trouble occurrence in any other radio signal transmitting/receiving unit, the spare radio signal transmitting/receiving unit executes data transmission and reception for the sector in which the in-trouble unit has been executing the data transmission and reception, by using the operation data corresponding to that sector.

## Claims

1. A radio base station comprising:
a plurality of radio signal transmitting/receiving means (20-1, 20-2, ..., 20-n; 120-1, 120-2, ..., 120-n) each having a sector-managing section (23; 123-1) that contains operation data for all sectors of a communication coverage area in which the base station is configured to transmit and receive data to and from a mobile station, wherein the number of radio signal transmitting/receiving means is greater than the number of sectors; and,
monitor/control means (40; 140) configured to assign more than one of the radio signal transmitting/receiving means to a sector in which transmission or reception difficulties are encountered;
wherein the base station also comprises a connecting means (62, 162) for connecting the plurality of radio signal transmitting/receiving means to one another without the agency of the monitor/control means.

2. A radio base station as in claim 1, and also comprising a plurality of baseband signal processing means (30-1, 30-2, ..., 30-N; 130-1, 130-2, ..., 130-N) for baseband-processing data received and/or to-be-transmitted via the plurality of radio signal transmitting/receiving means;
wherein:
a respective one of said radio signal transmitting/receiving means is assigned to each said sector for transmitting and receiving data to and from a mobile station;
the monitor/control means monitors and controls the plurality of radio signal transmitting/receiving means and the plurality of baseband signal processing means;
each radio signal transmitting/receiving means executes the data transmission and reception by using operation data determined for each sector; and,
each of the plurality of radio signal transmitting/receiving means manages all the operation data predetermined for the plurality of sectors, and uses selected operation data, out of the aforesaid operation data, for causing the data transmission and reception to be executed in the sector that corresponds to the selected operation data.

3. A radio base station as in claim 1 or 2, wherein each (20-1; 120-1) of the plurality of radio signal transmitting/receiving means recognizes the operation state of all the other radio signal transmitting/receiving means (20-2, ... 20-n; 120-2, ..., 120-n) via the connecting means (62; 162), and is able to use corresponding operation data to that used by an in-trouble radio signal transmitting/receiving means so as to transmit and receive in the same sector as the in-trouble radio signal transmitting/receiving means.

4. The radio base station according to any preceding claim, wherein the plurality of radio signal transmitting/receiving means each includes:
a sector-managing section (23; 123-1) for managing all the operation data predetermined for each of the plurality of sectors;
a state-data judging section (21; 121-1) for checking the operation state of the other radio signal transmitting/receiving means, by obtaining state data indicative of the operation state of the other radio signal transmitting/receiving means via the connecting means (62; 162), and for transmitting to the other radio signal transmitting/receiving means state data indicative of the operation state of the radio signal transmitting/receiving means of which it forms part; and,
a selector section (22; 122-1) for selecting, among the operation data managed in the sector managing section, operation data corresponding to a sector in which an in-trouble radio signal transmitting/receiving means executes data transmission and reception, the selection being on the basis of a check result in the state-data judging section.

5. The radio base station according to any one of claims 2 to 4, further comprising:
a load dispersion processing means (150) for transmitting, under control of the monitor control means (140), baseband-processed data from the baseband signal processing means (130-1, 130-2, ..., 130-N) to a predetermined radio signal transmitting/receiving means from among the plurality of radio signal transmitting/receiving means.

6. The radio base station according to claim 5, wherein the load dispersion processing means (150) transmits data received by the radio signal transmitting/receiving means to all of the plurality of baseband signal processing means.

7. A Code-Division Multiple-Access (CDMA) communication system that includes the radio base station of any one of the preceding claims.

8. A method for communicating between a radio base station and mobile stations of a CDMA communication system, the method comprising the steps of:
dividing a communication coverage area into a plurality of sectors for data transmission and reception with respect to the mobile stations by using particular operation data for each sector;
storing, in each of a plurality of radio signal transmitting/receiving units (20-1, 20-1, ..., 20-n; 120-1, 120-2, ..., 120-n) of the system, operation data to be used for each of the plurality of sectors for communication with the mobile stations;
selecting, out of the operation data, selected operation data for transmitting and receiving data in a sector corresponding to the selected operation data;
setting a specified sector, corresponding to the selected operation data, for transmission and reception of data;
causing the specified sector to be used for data transmission to and reception from mobile stations, by using the selected operation data; and
connecting the plurality of radio signal transmitting/receiving means together by a connecting means (62; 162) so that they are in direct communication with each other.

9. The communicating method of claim 8, wherein each (20-1; 120-1) of the plurality of radio signal transmitting/receiving means recognizes the operation state of all the other radio signal transmitting/receiving means (20-2, ..., 20-n; 120-2, ..., 120-n) via the connecting means (62; 162), and wherein one of the radio signal transmitting/receiving means, upon recognizing the operation state of an in-trouble radio signal transmitting/receiving means, selects the sector of the in-trouble radio signal transmitting/receiving means for data transmission to and reception from mobile stations, by using the operation data of the selected sector.

## Patentansprüche

1. Funkbasisstation die aufweist:
eine Mehrzahl von Funksignale sendenden/empfangenden Mitteln (20-1, 20-2, ..., 20-n; 120-1, 120-2, ..., 120-n), von denen jedes einen Sektor verwaltenden Abschnitt (23; 123-1) aufweist, der Betriebsdaten für alle Sektoren eines Kommunikationsversorgungsbereichs enthält, in dem die Basisstation dazu ausgebildet ist, Daten zu und von einer Mobilstation zu senden und zu empfangen, wobei die Anzahl von Funksignale sendenden/empfangenden Mittel größer ist als die Anzahl von Sektoren; und
Überwachungs/steuermittel (40; 140), die dazu ausgebildet sind, mehr als eines der Funksignale sendenden/empfangenden Mittel einem Sektor zuzuordnen, in dem Sende- oder Empfangsschwierigkeiten auftreten;
wobei die Basisstation auch Verbindungsmittel (62, 162) zum Verbinden der Mehrzahl von Funksignale sendenden/empfangenden Mitteln miteinander ohne die Vermittlung der Überwachungs/steuermittel aufweist.

2. Funkbasisstation nach Anspruch 1, die auch eine Mehrzahl von Basisbandsignalverarbeitungsmitteln (30-1, 30-2, ..., 30-N; 130-1, 130-2, ..., 130-N) zum Basisbandverarbeiten von Daten aufweist, die über die Mehrzahl von Funksignale sendenden/empfangenden Mitteln empfangen worden sind oder gesendet werden sollen;
wobei
ein entsprechendes der Funksignale sendenden/empfangenden Mittel jedem Sektor zum Senden und Empfangen von Daten zu und von einer Mobilstation zugeordnet ist;
die Überwachungs/steuermittel die Mehrzahl von Funksignale sendenden/empfangenden Mittel und die Mehrzahl von Basisbandsignal verarbeiteten Mitteln überwachen und steuern;
jedes Funksignale sendende/empfangende Mittel die Datenübertragung und den Empfang unter Verwendung von Betriebsdaten durchführt, die für jeden Sektor bestimmt sind; und
jede der Mehrzahl von Funksignale sendenden/empfangenden Mitteln alle Betriebsdaten verwaltet, die für die Mehrzahl von Sektoren vorbestimmt sind, und ausgewählte Betriebsdaten aus den vorgenannten Betriebsdaten verwendet, um zu bewirken, dass die Datenübertragung und der Datenempfang in dem Sektor durchgeführt wird, der den ausgewählten Betriebsdaten entspricht.

3. Funkbasisstation nach Anspruch 1 oder 2, bei der jedes (20-1; 120-1) der Mehrzahl von Funksignale sendenden/empfangenden Mittel den Betriebszustand aller anderen Funksignale sendenden/empfangenden Mittel (20-2, ..., 20-n; 120-2, ..., 120-n) über die Verbindungsmittel (62; 162) erkennt und im Stande ist, entsprechende Betriebsdaten zu denen zu verwenden, die durch ein Funksignale sendendes/empfangendes Mittel, das Schwierigkeiten hat, verwendet werden, um so im selben Sektor wie das sich in Schwierigkeiten befindende Funksignale sendende/empfangende Mittel zu senden und zu empfangen.

4. Funkbasisstation nach einem vorangehenden Anspruch, bei der die Mehrzahl von Funksignale sendenden/empfangenden Mittel jeweils einschließt:
einen Sektor verwaltenden Abschnitt (23; 123-1) zum Verwalten aller Betriebsdaten, die für jeden der Mehrzahl von Sektoren vorbestimmt sind;
einen Zustandsdaten beurteilenden Abschnitt (21; 121-1) zum Prüfen des Betriebszustandes der anderen Funksignale sendenden/empfangenden Mittel, indem Zustandsdaten erhalten werden, die bezeichnend sind für den Betriebszustand der anderen Funksignale sendenden/empfangenden Mittel, über die Verbindungsmittel (62; 162), und zum Senden von Daten zu anderen Funksignale sendende/empfangenden Mittel, die bezeichnend sind für den Betriebszustand der Funksignale sendende/empfangenden Mittel, von denen er einen Teil bildet; und
einen Auswählabschnitt (22; 122-1) zum Auswählen von Betriebsdaten unter den Betriebsdaten, die im sektorverwaltenden Abschnitt verwaltet werden, die einem Sektor entsprechen, in dem das in Schwierigkeiten empfindliche Funksignale sendende/empfangende Mittel Datensendung und- Empfang durchführt, wobei die Auswahl aufgrund eines Prüfergebnisses im Zustandsdaten beurteilenden Abschnitt durchgeführt wird.

5. Funkbasisstation nach einem der Ansprüche 2 bis 4, die weiter aufweist:
Lastverteilungsverarbeitungsmittel (150) zum Senden unter Steuerung durch die Überwachungssteuermittel (140) von basisbandverarbeiteten Daten von den Basisbandsignalverarbeitungsmitteln (130-1, 130-2, ..., 130-N) zu einem vorbestimmten Funksignale sendenden/empfangenden Mittel aus der Mehrzahl von Funksignale sendenden/empfangenden Mitteln.

6. Funkbasisstation nach Anspruch 5, bei der die Lastverteilungsbearbeitungsmittel (150) Daten, die durch die Funksignale sendenden/empfangenden Mittel empfangen sind, zu allen der Mehrzahl von Basisbandsignalverarbeitungsmitteln sendet.

7. Codemehrfachzugriff (CDMA) Kommunikationssystem, das die Funkbasisstation einer der vorangehenden Ansprüche einschließt.

8. Verfahren zur Kommunikation zwischen einer Funkbasisstation und mobilen Stationen eines CDMA-Kommunikationssystems, welches die Schritte aufweist:
einen Kommunikationsversorgungsbereich in eine Mehrzahl von Sektoren für Datensendung und- empfang in Bezug auf die Mobilstationen aufzuteilen, indem besondere Betriebsdaten für jeden Sektor verwendet werden;
in jeder der Mehrzahl von Funksignale sendenden/empfangenden Einheiten (20-1, 20-2, ..., 20-n; 120-1, 120-2,..., 120-n) des Systems Betriebsdaten zu speichern, die für jeden der Mehrzahl von Sektoren für Kommunikation mit den Mobilstationen verwendet werden sollen;
aus den Betriebsdaten ausgewählte Betriebsdaten zum Senden und Empfangen von Daten in einem Sektor auswählen, der den ausgewählten Betriebsdaten entspricht;
einen besonderen Sektor, der den ausgewählten Betriebsdaten entspricht, zum Senden und Empfang von Daten einzustellen;
bewirken, dass der angegebene Sektor für Datensendung zu und Datenempfang von Mobilstationen benutzt werden soll, indem die ausgewählten Betriebsdaten verwendet werden; und
die Mehrzahl von Funksignale sendenden/empfangenden Mittel miteinander durch Verbindungsmittel (62; 162) zu verbinden, so dass sie in direkter Kommunikation miteinander sind.

9. Kommunikationsverfahren nach Anspruch 8, bei dem jedes (20-1; 120-1) der Mehrzahl von Funksignale sendenden/empfangenden Mittel den Betriebszustand aller anderen Funksignale sendenden/empfangenden Mittel (20-2, ..., 20-n; 120-2, ..., 120-n) über die Verbindungsmittel(62; 162) erkennt, und wobei eines der Funksignale sendenden/empfangenden Mittel bei Erkennung des Betriebszustandes eines sich in Schwierigkeit befindenden Funksignale sendenden/empfangenden Mittels den Sektor des in Schwierigkeiten befindlichen Funksignale sendenden/empfangenden Mittel für Datensendung zu und Datenempfang von Mobilstationen auswählt, indem die Betriebsdaten des ausgewählten Sektors verwendet werden.

## Revendications

1. Station de base radio comprenant :
une pluralité de moyens de transmission / réception de signaux radio (20-1, 20-2, ..., 20-n ; 120-1, 120-2, ..., 120-n) comportant chacun une section de gestion de secteurs (23 ; 123-1) qui contient des données opérationnelles pour tous les secteurs d'une zone de couverture de communication dans laquelle la station de base est configurée pour transmettre des données vers et recevoir des données en provenance d'une station mobile, dans laquelle le nombre de moyens de transmission / réception de signaux radio est supérieur au nombre de secteurs ; et,
des moyens de commande / surveillance (40 ; 140) configurés pour attribuer plus d'un des moyens de transmission / réception de signaux radio à un secteur dans lequel des difficultés de transmission ou de réception sont rencontrées ;
dans laquelle la station de base comprend également des moyens de connexion (62, 162) pour connecter la pluralité de moyens de transmission / réception de signaux radio les uns aux autres sans l'aide des moyens de commande / surveillance.

2. Station de base radio selon la revendication 1, et comprenant également une pluralité de moyens de traitement de signaux dans la bande de base (30-1, 30-2, ..., 30-N ; 130-1, 130-2, ..., 130-N) pour traiter dans la bande de base des données reçues et/ou qui doivent être transmises par le biais de la pluralité de moyens de transmission / réception de signaux radio ;
dans laquelle :
un desdits moyens de transmission / réception de signaux radio respectif est attribué à chacun desdits secteurs pour transmettre des données vers et recevoir des données en provenance d'une station mobile ;
les moyens de commande / surveillance surveillent et commandent la pluralité de moyens de transmission / réception de signaux radio et la pluralité de moyens de traitement de signaux dans la bande de base ;
Chacun des moyens de transmission / réception de signaux radio exécute la transmission et la réception des données en utilisant les données opérationnelles déterminées pour chacun des secteurs ; et,
chacun de la pluralité de moyens de transmission / réception de signaux radio gère la totalité des données opérationnelles prédéterminées pour la pluralité de secteurs, et utilise des données opérationnelles sélectionnées, parmi les données opérationnelles susmentionnées, afin d'amener la transmission et la réception des données à être exécutées dans le secteur qui correspond aux données opérationnelles sélectionnées.

3. Station de base radio selon la revendication 1 ou 2, dans laquelle chacun (20-1 ; 120-1) de la pluralité de moyens de transmission / réception de signaux radio reconnaît l'état de fonctionnement de tous les autres moyens de transmission / réception de signaux radio (20-2, ... 20-n ; 120-2, ...., 120-n) par le biais des moyens de connexion (62 ; 162), et est capable d'utiliser les données opérationnelles correspondantes qui sont utilisées par des moyens de transmission / réception de signaux radio en difficulté, de manière à transmettre et à recevoir dans le même secteur que les moyens de transmission / réception de signaux radio en difficulté.

4. Station de base radio selon l'une quelconque des revendications précédentes, dans laquelle chacun de la pluralité de moyens de transmission / réception de signaux radio comprend :
une section de gestion de secteurs (23 ; 123-1) pour gérer la totalité des données opérationnelles prédéterminées pour chacun de la pluralité de secteurs ;
une section d'évaluation des données d'état (21 ; 121-1) pour contrôler l'état de fonctionnement des autres moyens de transmission / réception de signaux radio, en obtenant des données d'état indiquant l'état de fonctionnement des autres moyens de transmission / réception de signaux radio par le biais des moyens de connexion (62 ; 162), et pour transmettre aux autres moyens de transmission / réception de signaux radio des données d'état indiquant l'état de fonctionnement des moyens de transmission / réception de signaux radio dont elle fait partie ; et,
une section de sélection (22 ; 122-1) pour sélectionner, parmi les données opérationnelles gérées dans la section de gestion de secteurs, les données opérationnelles correspondant à un secteur dans lequel des moyens de transmission / réception de signaux radio en difficulté exécutent la transmission et la réception des données, la sélection se faisant sur la base du résultat d'un contrôle dans la section d'évaluation des données d'état.

5. Station de base radio selon l'une quelconque des revendications 2 à 4, comprenant en outre :
des moyens de traitement de la dispersion d'une charge (150) pour transmettre, sous le contrôle des moyens de commande / surveillance (140), les données traitées par la bande de base en provenance des moyens de traitement de signaux dans la bande de base (130-1, 130-2, ..., 130-N) vers des moyens de transmission / réception de signaux radio prédéterminés pris parmi la pluralité de moyens de transmission / réception de signaux radio.

6. Station de base radio selon la revendication 5, dans laquelle les moyens de traitement de la dispersion d'une charge (150) transmettent les données reçues par les moyens de transmission / réception de signaux radio à la totalité de la pluralité de moyens de traitement de signaux dans la bande de base.

7. Système de communication à accès multiple par répartition en code (AMRC) qui comprend la station de base radio selon l'une quelconque des revendications précédentes.

8. Procédé pour la communication entre une station de base radio et des stations mobiles d'un système de communication AMRC, le procédé comprenant les étapes consistant à :
diviser une zone de couverture de communication en une pluralité de secteurs pour la transmission et la réception de données par rapport aux stations mobiles en utilisant des données opérationnelles particulières pour chaque secteur ;
stocker, dans chacune d'une pluralité d'unités de transmission / réception de signaux radio (20-1, 20-2, ..., 20-n ; 120-1, 120-2, ..., 120-n) du système, les données opérationnelles qui doivent être utilisées pour chacun de la pluralité de secteurs pour la communication avec les stations mobiles ;
sélectionner, parmi les données opérationnelles, des données opérationnelles sélectionnées pour transmettre et recevoir des données dans un secteur correspondant aux données opérationnelles sélectionnées ;
définir un secteur spécifié, correspondant aux données opérationnelles sélectionnées, pour la transmission et la réception des données ;
amener le secteur spécifié à être utilisé pour la transmission de données vers les et la réception de données en provenances des stations mobiles, en utilisant les données opérationnelles sélectionnées ; et
connecter la pluralité de moyens de transmission / réception de signaux radio ensemble par le biais de moyens de connexion (62 ; 162) de manière à ce qu'ils se trouvent en communication directe les un avec les autres.

9. Procédé de communication selon la revendication 8, dans lequel chacun (20-1 ; 120-1) de la pluralité de moyens de transmission / réception de signaux radio reconnaît l'état de fonctionnement de tous les autres moyens de transmission / réception de signaux radio (20-2, ..., 20-n ; 120-2, ..., 120-n) par le biais des moyens de connexion (62 ; 162), et dans lequel un des moyens de transmission / réception de signaux radio, après avoir reconnu l'état de fonctionnement de l'un des moyens de transmission / réception de signaux radio en difficulté, sélectionne le secteur du moyen de transmission / réception de signaux radio en difficulté pour la transmission de données vers les et la réception de données en provenance des stations mobiles, en utilisant les données opérationnelles du secteur sélectionné.
